(19) **Europäisches Patentamt**
**European Patent Office**
**Office européen des brevets**

(11) Numéro de publication : **0 296 026 B1**

(12) # FASCICULE DE BREVET EUROPEEN

(45) Date de publication du fascicule du brevet :
**21.08.91 Bulletin 91/34**

(51) Int. Cl.⁵ : **B60R 22/20**

(21) Numéro de dépôt : **88401395.4**

(22) Date de dépôt : **08.06.88**

(54) **Dispositif perfectionné de réglage de la position d'un renvoi de sangle notamment de ceinture de sécurité de véhicule automobile.**

(30) Priorité : **19.06.87 FR 8708634**

(43) Date de publication de la demande :
**21.12.88 Bulletin 88/51**

(45) Mention de la délivrance du brevet :
**21.08.91 Bulletin 91/34**

(84) Etats contractants désignés :
**DE ES GB IT SE**

(56) Documents cités :
**DE-A- 2 460 092**
**DE-A- 3 112 458**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Escaravage, Gérard**
**5 Impasse des Graverots**
**F-25700 -Valentigney (FR)**

(74) Mandataire : **Mestre, Jean et al**
**c/o CABINET LAVOIX 2, place d'Estienne d'Orves**
**F-75441 Paris Cédex 09 (FR)**

## Description

La présente invention concerne un dispositif de réglage de la position d'un renvoi de sangle notamment de ceinture de sécurité pour véhicule automobile.

Sur la plupart des véhicules, ce renvoi de sangle est disposé sur un point d'ancrage fixé sur la carrosserie du véhicule, à une hauteur convenant à une majorité d'utilisateurs dits de taille normale.

Toutefois, cette hauteur ne convient pas à certains utilisateurs, en particulier aux personnes de petite taille.

Pour résoudre ce problème, on connaît dans l'état de la technique un certain nombre de dispositifs de réglage de la hauteur de ce renvoi de sangle.

Ainsi, par exemple, on connaît d'après le document FR-A-2484343, un dispositif de réglage en hauteur d'un point d'ancrage d'une ceinture de sécurité, dans lequel un coulisseau se déplace le long d'une tige support filetée dans la plage de réglage de l'ancrage, ladite tige étant montée à rotation entre les parois d'un boîtier fixé à un élément de la carrosserie du véhicule. La face frontale de ce coulisseau porte une ferrure d'ancrage de la ceinture et sa face dorsale porte un organe d'immobilisation en rotation du coulisseau qui le guide le long de la paroi de fond du boîtier.

On connait également d'après le document FR-A-2488201, un dispositif pour régler la hauteur d'une ferrure de renvoi d'une ceinture de sécurité de véhicule, comportant un organe de réglage portant la ferrure avec un verrou s'enclenchant dans des crans d'arrêt d'un guidage rectiligne, le verrou pouvant être dégagé par un mécanisme de manoeuvre.

On connait également d'après le document FR-A-2482539, un dispositif pour le réglage du point d'ancrage d'une ceinture de sécurité, disposé au-dessus de l'épaule d'un occupant d'un véhicule, dans lequel le point d'ancrage est porté par un curseur de glissière monté déplaçable dans une glissière et immobilisable en position par un cliquet coopérant avec une série d'orifices réalisés dans la glissière.

Le document FR-A-2513887 décrit quant à lui un dispositif pour le réglage de la position en hauteur de la ferrure supérieure du baudrier d'une ceinture de sécurité. Ce dispositif comprend une glissière solidaire de la carrosserie du véhicule, munie d'une fente de guidage et d'évidements, dans lesquels pénètre au moins un organe de blocage monté sur un coulisseau qui porte la ferrure et peut être verrouillé et déverrouillé au moyen d'un organe d'actionnement manuel.

Le document FR-A-2543838 décrit un dispositif d'ancrage pour point haut de ceinture de sécurité, comprenant un rail ayant plusieurs trous qui sont en deux parties, et un ergot de blocage qui peut être commandé par un bouton de manoeuvre. Le réglage de la position du point d'ancrage est obtenu par extraction de l'ergot du trou, déplacement du coulisseau et réintroduction de l'ergot dans un autre trou.

Enfin, le document FR-A-2536288 décrit un dispositif pour le réglage en hauteur d'une ceinture de sécurité pour véhicule automobile, constitué par une glissière de guidage comportant des deux côtés, des ouvertures de verrouillage disposées les unes au-dessus des autres, et un chariot qui peut être déplacé dans la glissière, ce chariot portant une pièce de fixation ou de renvoi de la ceinture et comportant des éléments d'arrêt qui peuvent être déplacés transversalement par rapport à la direction du mouvement du chariot, au moyen d'une touche en s'opposant à l'action d'un ressort, pour passer d'une position de verrouillage à une position de déverrouillage.

Cependant, tous ces dispositifs présentent un certain nombre d'inconvénients, notamment au niveau des possibilités de réglage, de leur structure relativement complexe et donc de leurs coûts de fabrication et de montage relativement élevés.

Par ailleurs, dans la plupart des dispositifs connus, les organes de verrouillage sont sollicités vers leur position de verrouillage par des moyens élastiques qui exercent sur ceux-ci, une force de maintien relativement importante. Ceci oblige l'utilisateur qui désire déplacer le renvoi de sangle, à exercer sur les organes de déplacement de ces moyens de verrouillage, une force relativement importante pour déplacer les moyens de verrouillage vers leur position escamotée et permettre ainsi le déplacement du renvoi de sangle.

Le dernier type d'inconvénients se rencontre par exemple pour la solution exposée dans le document DE-A-2460092. Le dispositif qui y est divulgué comprend un boîtier fixe percé d'une ouverture configurée en crémaillère dans laquelle peut se mouvoir un axe épaulé auquel est assujetti un renvoi de sangle. Cet axe est maintenu engagé dans la crémaillère grâce à un plateau presseur soumis à l'action d'un ressort dont il faut vaincre l'effort pour changer de position le renvoi de sangle.

Le but de l'invention est donc de résoudre les problèmes évoqués ci-dessus en proposant un dispositif de réglage simple, rapide et précis, de la position du renvoi de sangle, pour adapter celle-ci à la morphologie de l'utilisateur.

A cet effet, l'invention a pour objet un dispositif de réglage de la position d'un renvoi de sangle, notamment de ceinture de sécurité de véhicule automobile, entre au moins deux positions, d'un type exposé dans le préambule de la revendication principale et dont les éléments distinctifs sont révélés notamment par la partie caractérisante de cette revendication.

L'invention sera mieux comprise à l'aide de la description qui va suivre, donnée uniquement à titre d'exemple et faite en se référant aux dessins annexés, sur lesquels :

— la Fig. 1 représente une vue en coupe d'un dispositif selon l'invention ;

— la Fig. 2 représente une vue de face d'un dispositif selon l'invention ; et

— la Fig. 3 représente une variante de réalisation d'un organe formant verrou entrant dans la constitution d'un dispositif selon l'invention.

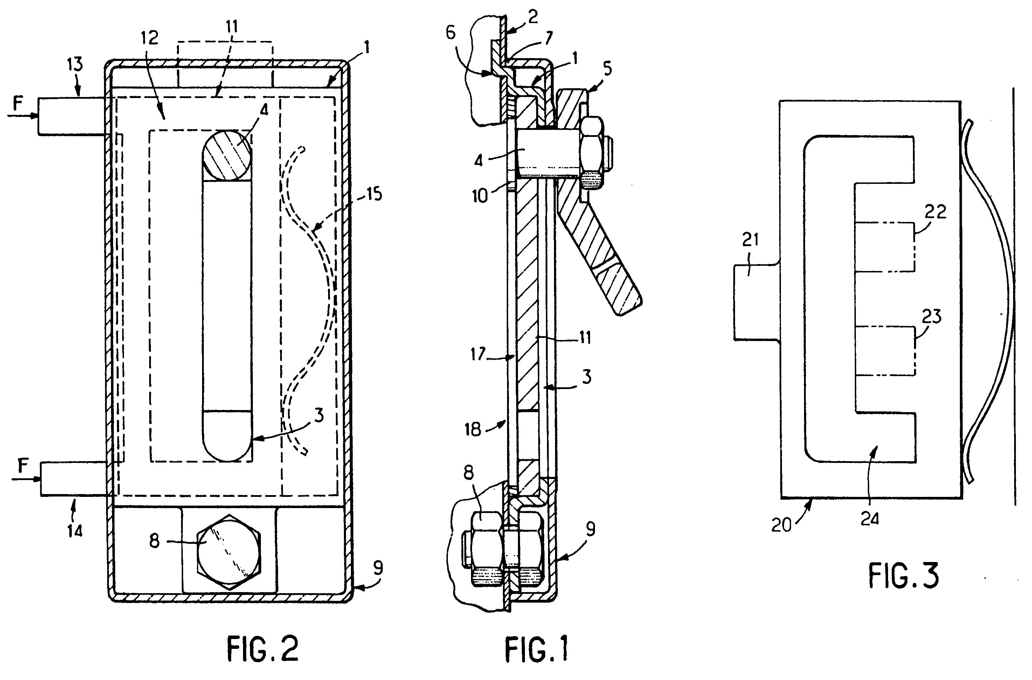

Ainsi qu'on peut le voir sur les figures 1 et 2, un dispositif de réglage de la position d'un renvoi de sangle, notamment de ceinture de sécurité de véhicule automobile, selon l'invention, comporte un rail de guidage 1 se présentant sous la forme d'un boîtier sans fond, fixé sur le montant 2 du véhicule automobile et comprenant une lumière 3 par exemple droite, dans laquelle se déplace une broche 4 de fixation du renvoi de sangle 5.

La fixation du rail 1 sur le montant 2 du véhicule est par exemple assurée dans la partie supérieure de celui-ci par une portion repliée 6 de celui-ci, s'engageant dans un évidement 7 du montant, et dans la partie inférieure du renvoi par un système vis-écrou 8. Un habillage 9 de type connu en soi, peut également être prévu autour de l'ensemble pour améliorer la présentation de celui-ci.

La broche 4 de fixation du renvoi 5 comporte une embase 10, par exemple carrée, et un organe formant verrou 11 est disposé entre cette embase et le rail 1 comme on peut le voir plus particulièrement sur la Fig. 1. Cet organe 11 formant verrou, comporte une lumière 12 (Fig. 2), qui présente la forme générale d'un C et dont la largeur est inférieure à la dimension de l'embase 11 de la broche 4 de fixation du renvoi pour bloquer celle-ci dans le rail. Cet organe formant verrou est monté déplaçable par l'intermédiaire de moyens de commande par exemple 13 et 14 entre une première position de verrouillage illustrée sur la Fig. 2, dans laquelle les deux branches de la lumière en C, 12, de l'organe formant verrou sont en regard de la lumière 3 du rail pour délimiter deux fenêtres de verrouillage de la broche du renvoi en position, correspondant à deux positions extrêmes de verrouillage et une seconde position, de déplacement du renvoi, dans laquelle la portion intermédiaire de la lumière 12 de l'organe 11 formant verrou est en regard de la lumière 3 du rail 1 pour permettre le déplacement du renvoi.

Des moyens élastiques 15 sont prévus pour solliciter l'organe formant verrou 11 en position de verrouillage. Les moyens de commande 13 et 14 sont constitués par deux organes de commande, disposés dans la partie supérieure et dans la partie inférieure de celui-ci et qui sont adaptés pour coopérer avec des portions correspondantes de l'organe formant verrou 11. Les moyens élastiques 15 sont quant à eux disposés entre l'organe formant verrou 11 et le rebord du rail, du côté opposé aux moyens de commande 13 et 14.

Avantageusement, ces moyens élastiques peuvent être constitués par une lame coudée élastique en appui d'une part sur le rail et d'autre part, sur l'organe formant verrou.

Au repos, les moyens élastiques sollicitent l'organe formant verrou 11 en position de verrouillage comme cela est illustré sur la figure 2. Lorsque l'utilisateur désire déplacer le renvoi de sangle, soit vers la position basse, soit vers la position haute, il exerce sur les moyens de commande 13 et 14, une force illustrée par les flèches F sur la Fig. 2 de manière à déplacer, par coulissement dans le rail, l'organe formant verrou vers sa position de déplacement du renvoi de sangle dans laquelle la broche 4 de celui-ci peut se déplacer dans la lumière 3 du rail. De plus, l'embase 10 de la broche se déplace dans une lumière 17 d'une plaque de guidage 18 prévue entre l'organe formant verrou 11 et le montant 2 du véhicule pour guider la broche lors de son déplacement de manière à faciliter le déplacement de celle-ci et réduire le bruit engendré à ce niveau.

Ainsi que cela est représenté sur la Fig. 3, un organe formant verrou 20 peut également ne comporter qu'un seul organe de commande 21, par exemple venu de matière avec le reste de l'organe 20.

Enfin, il va de soi que des encoches supplémentaires 22, 23 peuvent être ménagées à partir de la portion intermédiaire de la lumière 24 de l'organe formant verrou 20, ceci afin de ménager des positions de réglage supplémentaires pour le renvoi.

## Revendications

1. Dispositif de réglage de la position d'un renvoi de sangle, notamment de ceinture de sécurité de véhicule automobile, entre au moins deux positions, du type comportant un rail de guidage (1) fixé sur le montant (2) du véhicule et comprenant une lumière (3) dans laquelle se déplace une broche (4) de fixation du renvoi (5) munie d'une embase (10), un organe formant verrou (11 ; 20) présentant une lumière (12 ; 24) de forme générale en C et de largeur inférieure à la dimension de l'embase de la broche (4), ainsi que des moyens élastiques (15), dispositif caractérisé en ce que cet organe (11 ; 20) est prévu entre l'embase (10) et le rail (1) et est monté déplaçable, par l'intermédiaire de moyens de commande (13, 14 ; 21) entre une première position de verrouillage dans laquelle les deux branches de la lumière (12 ; 24) en C de l'organe formant verrou sont en regard de la lumière (3) du rail (1) de manière à délimiter au moins deux fenêtres de verrouillage de la broche du renvoi en position, correspondant auxdites positions, et une seconde position de déplacement du renvoi dans laquelle la portion intermédiaire de la lumière (12 ; 24) en C de l'organe formant verrou (11 ; 20) est en regard de la lumière (3) du rail (1) pour permettre le déplacement du renvoi et en ce que les moyens élastiques (15) sont prévus pour solliciter l'organe formant verrou (11 ; 20) en position de verrouillage.

2. Dispositif selon la revendication 1, caractérisé en ce qu'une plaque de guidage (17) comportant une lumière de guidage (18) de l'embase (10) de la broche (4) du renvoi est disposée entre l'organe formant verrou (11) et le montant (2) du véhicule.

3. Dispositif selon l'une quelconque des revendications précédentes, caractérisé en ce que les moyens élastiques (15) sont disposés entre l'organe formant verrou (11 ; 20) et le rail (1) du côté opposé aux moyens de commande correspondants (13, 14 ; 21).

4. Dispositif selon l'une quelconque des revendications précédentes, caractérisé en ce que les moyens élastiques comprennent au moins une lame coudée élastique (15) en appui d'une part sur l'organe formant verrou (11 ; 20) et d'autre part sur le rail (1).

5. Dispositif selon l'une quelconque des revendications précédentes, caractérisé en ce que les moyens de commande comprennent deux organes de commande (13, 14) disposés dans la partie supérieure et dans la partie inférieure du rail (1), et adaptés pour coopérer chacun avec une portion correspondante de l'organe formant verrou (11) pour le déplacer vers la position de déplacement de la broche et donc du renvoi.

6. Dispositif selon l'une quelconque des revendications 1 à 4, caractérisé en ce que les moyens de commande comprennent un organe de commande (22) venu de matière avec le reste de l'organe formant verrou (20).

7. Dispositif selon l'une quelconque des revendications précédentes, caractérisé en ce que des encoches supplémentaires (22, 23) sont prévues au niveau de la portion intermédiaire de la lumière (24) de l'organe formant verrou (20) et délimitant autant de positions de réglage pour le renvoi.

**Patentansprüche**

1. Vorrichtung zum Einstellen der Lage eines Gurtumlenkbeschlages, insbesondere für den Sicherheitsgurt eines Kraftfahrzeuges zwischen wenigstens zwei Positionen mit einer Führungsschiene (1), die an der Säule (2) des Fahrzeuges befestigt wird und ein Langloch (3) aufweist, in dem ein Scharnierstift (4) zum Befestigen des Umlenkbeschlages (5) verschiebbar angeordnet ist, der eine Fußplatte (10) aufweist, mit einem einen Riegel (11 ; 20) bildenden Element, das ein Langloch (12 ; 24) aufweist, das im wesentlichen C-förmig ist und eine Breite hat, die kleiner als die Abmessung dur Fußplatte das Scharnierstiftes (4) ist, sowie mit elastischen Einrichtungen (15), dadurch gekennzeichnet, daß das Element (11; 20) zwischen der Fußplatte (10) und der Schiene (1) vorgesehen ist und über Betätigungseinrichtungen (13, 14 ; 21) zwischen einer ersten Verriegelungsposition, in der die beiden Zweige des C-förmigen Langloches (12 ; 24) des einen Riegel bildenden Elementes zu dem Langloch (3) der Schiene (1) ausgerichtet sind, um wenigstens zwei Fenster zum Verriegeln des Scharnierstiftes des Umlenkbeschlages in seiner Lage zu begrenzen, die den beiden Positionen entsprechen, und einer zweiten Position der Vesetzung dem Umlenkbeschlages verschiebbar angebracht ist, in der der mittlere Teil des C-förmigen Langloches (12 ; 24) des einen Riegel bildenden Elementes (11 ; 20) zum Langloch (3) der Schiene (1) ausgerichtet ist, um den Umlenkbeschlag verschieben zu können, und die elastischen Einrichtungen (15) dazu vorgesehen sind, das einen Riegel bildende Element (11 ; 20) in der Verriegelungsposition zu beaufschlagen.

2. Vorrichtung nach Anspruch 1, dadurch gekennzeichnet, daß eine Führungsplatte (17), die ein Führungslangloch (18) für die Fußplatte (10) des Scharnierstiftes (4) des Umlenkbeschlages aufweist, zwischen dem einen Riegel bildenden Element (11) und der Säule (2) des Fahrzeuges angeordnet ist.

3. Vorrichtung nach einem der vorhergehenden Ansprüche, dadurch gekennzeichnet, daß die elastischen Einrichtungen (15) zwischen dem einen Riegel bildenden Element (11 ; 20) und der Schiene (1) an dem Rand angeordnet sind, der den entsprechenden Betätigungseinrichtungen (13, 14 ; 21) gegenüberliegt.

4. Vorrichtung nach einem der vorhergehenden Ansprüche, dadurch gekennzeichnet, daß die elastischen Einrichtungen wenigsten ein gebogenes elastisches Blatt (15) umfassen, daß einerseits an dem einen Riegel bildenden Element (11 ; 20) und andererseits an der Schiene (1) anliegt.

5. Vorrichtung nach einem der vorhergehenden Ansprüche, dadurch gekennzeichnet, daß die Betätigungseinrichtungen zwei Betätigungselemente (13, 14) umfassen, die am oberen und am unteren Teil der Schiene (1) angeordnet sind und jeweils mit einem entsprechenden Teil des einen Riegel bildenden Elementes (11) zusammenarbeiten können, um dieses in die Versetzungsposition des Scharnierstiftes und somit des Umlenkbeschlages zu verschieben.

6. Vorrichtung nach einem der Ansprüche 1 bis 4, dadurch gekennzeichnet, daß die Betätigungseinrichtungen ein Betätigungselement (22) umfassen, das in einem Stück mit dem Rest des einem Riegel bildenden Elementes (20) ausgebildet ist.

7. Vorrichtung nach einem der vorhergehenden Ansprüche, dadurch gekennzeichnet, daß Zusatzaussparungen (22, 23) auf der Höhe des mittleren Teils des Langloches (24) des einen Riegel bildenden Elementes (20) vorgesehen sind und andere Einstellpositionen für den Umlenkbeschlag begrenzen.

## Claims

1. Device for adjusting the position of a strap return, in particular of a motor vehicle safety belt, between at least two positions, of the type comprising a guide rail (1) fixed to the post (2) of the vehicle and comprising a slot (3), in which a fixing pin (4) for the return (5), which pin is equipped with a base (10), is displaced, a member forming a lock (11 ; 20) which has a generally C-shaped slot (12 ; 24) of a width which is less than the dimension of the base of the pin (4), as well as resilient means (15), characterised in that this member (11 ; 20) is provided between the base (10) and the rail (1) and is mounted to be displaceable, by control means (13, 14 ; 21), between a first, locking position, in which the two branches of the C-shaped slot (12 ; 24) of the member forming a lock are opposite the slot (3) of the rail (1) so as to delimit at least two apertures for locking the pin of the return in position, corresponding to said positions, and a second position for displacement of the return, in which the intermediate portion of the C-shaped slot (12 ; 24) of the member forming a lock (11 ; 20) is opposite the slot (3) of the rail (1) in order to permit the displacement of the return, and in that the resilient means (15) are provided to bias the member forming a lock (11 ; 20) in the locking position.

2. Device according to Claim 1, characterised in that a guide plate (17) comprising a guide slot (18) for the base (10) of the pin (4) of the return is arranged between the member forming a lock (11) and the post (2) of the vehicle.

3. Device according to either one of the preceding claims, characterised in that the resilient means (15) are arranged between the member forming a lock (11 ; 20) and the rail (1) on the opposite side to the corresponding control means (13, 14 ; 21).

4. Device according to any one of the preceding claims, characterised in that the resilient means comprise at least one bent resilient strip (15) which bears on the one hand against the member forming a lock (11 ; 20) and on the other hand against the rail (1).

5. Device according to any one of the preceding claims, characterised in that the control means comprise two control members (13, 14) which are arranged in the upper part and in the lower part of the rail (1) and are each adapted to interact with a corresponding portion of the member forming a lock (11) in order to displace it towards the position for displacement of the pin and thus of the return.

6. Device according to any one of Claims 1 to 4, characterised in that the control means comprise one control member (22) made in one piece with the rest of the member forming a lock (20).

7. Device according to any one of the preceding claims, characterised in that additional recesses (22, 23) are provided in the intermediate portion of the slot (24) of the member forming a lock (20), which delimit as many positions of adjustment for the return.

FIG.2

FIG.1

FIG.3

EP 0 296 026 B1